# EUROPÄISCHE PATENTANMELDUNG

(11) **EP 0 887 107 A2**
(43) Veröffentlichungstag der Anmeldung: **30.12.1998**
(21) Anmeldenummer: 98111797.1
(22) Anmeldetag: 26.06.1998
(51) Int. Cl.: B03B 9/06, B07B 9/00

(54) **Verfahren und Vorrichtung zum Rückgewinnen von Naturstein aus Abfallstoffen**

(30) Priorität: 26.06.1997 DE 19727155
(71) Anmelder: HUTTER, Sandra, D-73450 Neresheim (DE); C.G. Mozer GmbH & Co. KG, 73037 Göppingen (DE)
(72) Erfinder: Hutter, Sandra, 73450 Neresheim (DE); Hardt, Klaus, 73116 Wäschenbeuren (DE)
(74) Vertreter: Dr. Weitzel & Partner

(57) **Zusammenfassung**

Die Erfindung betrifft ein Verfahren zum Rückgewinnen von Naturstein aus Abfall, der bei der Aufbereitung des Natursteins zu Baustoffen anfällt und der restliches Natursteinmaterial sowie Beimengungen wie Ton und Lehm enthält, mit den folgenden Verfahrensschritten:
der Abfall wird in einem Brecher soweit vorzerkleinert, daß er schüttfähig ist;
der schüttfähige Abfall wird erhitzt;
der erhitzte Abfall wird in eine solche Bewegung versetzt, daß sich seine Partikel relativ zueinander bewegen und sich aneinander reiben, bis wenigstens ein wesentlicher Teil der Beimengungen in Krümel- oder Pulverform vom Natursteinmaterial abgelöst ist;
Natursteinmaterial und Beimengungen werden einer Sichtung unterworfen; die Beimengungen werden abgeführt und das Natursteinmaterial wird einer Wiederverwendung zugeführt.

## Beschreibung

Die Erfindung betrifft ein Verfahren sowie eine Vorrichtung zum Rückgewinnen von Naturstein aus Abfallstoffen.

Insbesondere bei der Aufbereitung Von Naturstein zu Bau-Rohstoffen fällt solcher Abfall an. Als Naturstein kommt insbesondere Kalkstein in Betracht, so wie er auf der Schwäbischen Alb vorkommt.

Der genannte Abfall enthält außer Steinmaterial Beimengungen wie Lehm oder Ton. Von diesen Bestandteilen wäre das Steinmaterial brauchbar, wenn es in isolierter Form vorläge, während die Beimengungen völlig unbrauchbar sind.

Es ist bekannt, aus dem gesamten Abfall den Naturstein von den Beimengungen abzutrennen und somit rückzugewinnen. Die bekannten Rückgewinnungsverfahren sind im wesentlichen Waschverfahren. Hierbei wird Wasser zugeführt, um die Beimengungen von den Natursteinen abzuwaschen. Es folgt ein Sortierprozeß, bei dem die Beimengungen und das Wasser entfernt werden müssen. Die hierbei isolierten Steine selbst müssen wieder getrocknet werden, was Energieaufwand bedeutet. Aus diesem Grunde haben sich diese Waschverfahren nicht bewährt. Deswegen verzichtet man häufig auf eine Rückgewinnung des wertvollen Natursteinmateriales, das im Abfall noch vorhanden ist. Stattdessen verwendet man den Abfall zum Verfüllen von Bodensenken oder man schafft ihn auf Deponien. Der Transport zur Deponie ist mit Kosten verbunden. Deponieraum ist knapp, weshalb das Bereitstellen von Deponieraum ebenfalls Kosten verursacht.

Der Erfindung liegt die Aufgabe zugrunde, Maßnahmen anzugeben, mit welchen es möglich ist, das wertvolle Natursteinmaterial aus dem Abfall wiederzugewinnen, und zwar bei minimalen Investitions- und Betriebskosten.

Diese Aufgabe wird durch die Merkmale der unabhängigen Ansprüche gelöst.

Die Hauptgedanken der Erfindung bestehen darin, den Abfall ohne Zufuhr von Wasser vorzubrechen, so daß er eine wenigstens schüttfähige Konsistenz erlangt, sodann zu erhitzen, während des Erhitzens oder anschließend einer Reibbehandlung zu unterziehen, wobei sich die einzelnen Partikel des Abfalls aneinanderreiben und schließlich eine Sichtung vorzunehmen, wobei die nunmehr krümelförmigen oder pulverförmigen Beimengungen abgeschieden werden von den verbliebenen Natursteinen.

Das erfindungsgemäße Verfahren sowie die Anlage zum Durchführen des Verfahrens sind äußerst einfach. Die Anlage erfordert einen verhältnismäßig geringen Investitionsaufwand. Der Energiebedarf ist ebenfalls verhältnismäßig gering. Das zurückgewonnene Produkt, nämlich der Naturstein, liegt in sauberer, von Beimengungen freier Form vor. Der nunmehr verbleibende Restabfall, im allgemeinen Ton und Lehm in Krümel- oder Pulverform, ist von verhältnismäßig geringer Menge, so daß seine Entsorgung keine Probleme bereitet.

Besonders zweckmäßig ist eine Aufbereitungsanlage, die mit einem Bearbeitungsrohr arbeitet. Dieses Rohr hat einen Durchmesser, der sich beispielsweise im Bereich zwischen 0,5 und 2 m bewegt, und eine Lange von einigen Metern. Das Rohr wird im allgemeinen mehr oder minder horizontal angeordnet sein. Es kann jedoch auch eine Steigung oder Neigung aufweisen.

Die Heizeinrichtung ist entweder vor dem Einlaßende des Rohres angeordnet, oder unmittelbar im Bereich des Einlaßendes. Zweckmäßigerweise ist die Heizeinrichtung als Brenner ausgeführt, der derart angeordnet ist, daß die Flamme in Förderrichtung des Abfalls oder dieser Richtung entgegen weist. Jedenfalls sollten die heißen Gase über das Gut streichen.

Ferner ist das Behandlungsrohr zweckmäßigerweise stromabwärts des Einlaßendes, am besten im letzten Drittel seiner Länge, mit einer ringförmigen Ausbeulung versehen. In diese Ausbeulung gelangt der Abfallstrom. Dort sammelt sich eine größere Abfallmenge an, die beim Umlaufen des Rohres dem eingangs genannten Reibprozeß unterzogen wird.

Die Erfindung ist anhand der Zeichnung näher erläutert. Darin ist im einzelnen folgendes dargestellt:
- Fig. 1: zeigt eine Gesamtansicht einer Anlage zum Rückgewinnen von Naturstein aus Abfallstoffen in Draufsicht;
- Fig. 2: zeigt die wesentlichen Teile der Anlage gemäß Fig. 1 in Aufrißansicht;
- Fig. 3: zeigt den Gegenstand von Fig. 2 in einem zum Behandlungsrohr senkrechten Schnitt.

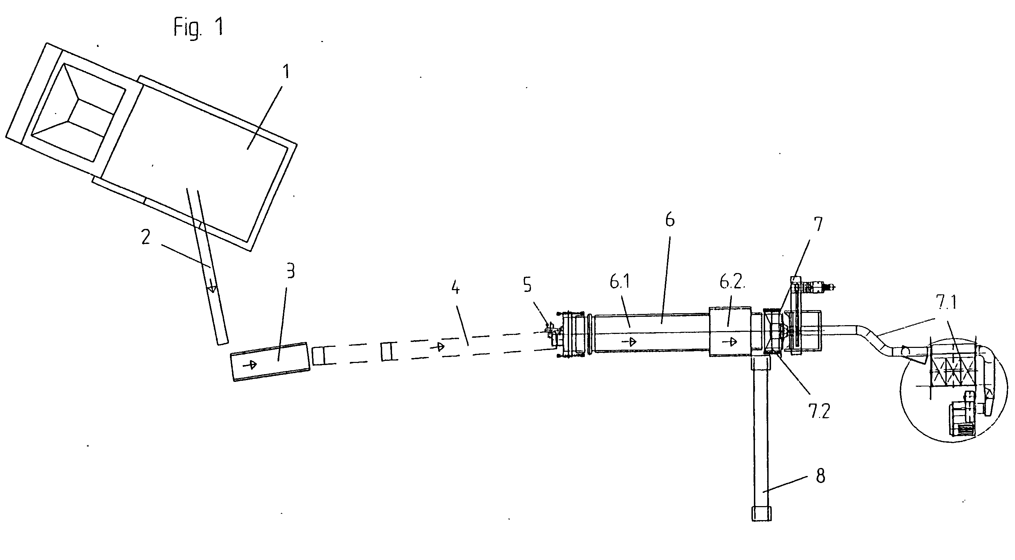

Wie man aus Fig. 1 erkennt, wird der Abfallstoff zunächst einer Vorbrecheranlage 1 zugeführt. Hierin wird der Abfall bis auf eine gewisse Größe vorzerkleinert, beispielsweise derart, daß er schüttfähig ist. Er gelangt sodann in eine Fördereinrichtung 2 zu einem Vorsortierer 3. Die Fördereinrichtung 2 kann ein Siebschüttband sein. Im Vorsortierer 3 werden Feinteile vom übrigen Gut abgetrennt. Diese Feinteile werden verworfen.

Sodann gelangt der Abfallstoff über einen weiteren Förderer 4 in den eigentlichen Bearbeitungsbereich. Dieser beginnt mit einem Brenner 5. An den Brenner 5 schließt sich ein Rohr 6 an. Das Rohr 6 ist gelagert, so daß es um seine eigene Längsachse drehbar ist. Es weist einen ersten Abschnitt 6.1 auf, sowie einen zweiten Abschnitt 6.2. Der zweite Abschnitt 6.2 ist gegenüber dem ersten Abschnitt 6.1 erweitert. An den zweiten Abschnitt 6.2 des Rohres 6 schließt sich ein Sichter 7 an.

Der Abfall wird im Brenner 5 auf Temperaturen erhitzt, die oberhalb der Verdampfungstemperatur von Wasser liegen. Der Abfall wird dabei direkt in die Brennkammer eingeführt. Der Brenner 5 ist mit seiner Brennerdüse derart gerichtet, daß die Flamme im Abschnitt 6.1 des Rohres 6 über den Abfall hinwegstreicht, und zwar in Förderrichtung. Der Abschnitt 6.1 stellt eine Trockenzone dar.

Im Abschnitt 6.2 geschieht folgendes: Der Abfall sammelt sich im Außenbereich dieses Abschnittes, d.h. im peripheren Ringraum, und bildet dort eine mehr oder minder ringförmige Schicht. Aufgrund des anhaltenden Förderstromes des Abfalles sowie aufgrund der Umdrehung des Rohres 6 findet eine gegenseitige Reibung der Partikel statt, die aus Naturstein sowie aus daran haftenden Beimengungen bestehen. Der Abschnitt 6.2 könnte somit als Reibzone bezeichnet werden. In dieser Reibzone findet ein Lösen der Beimengungen vom wertvollen Natursteinmaterial statt. Die Beimengungen fallen in Krümel- oder Pulverform an.

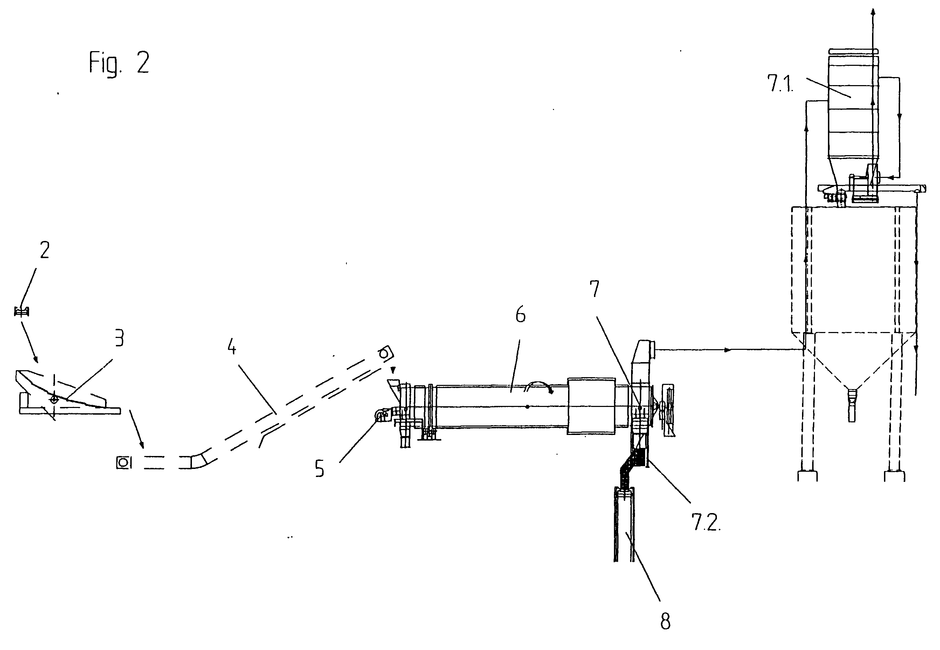

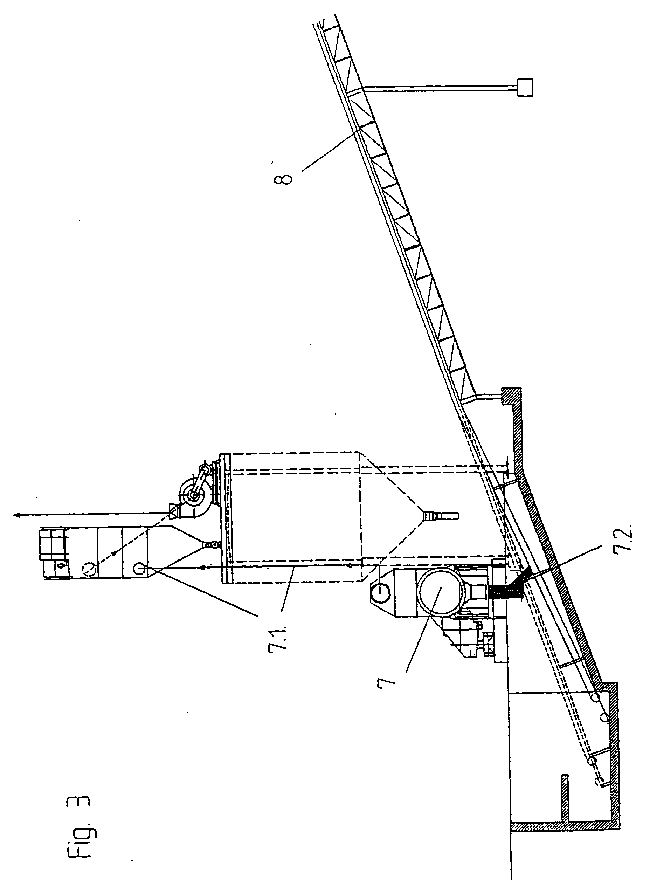

Das gesamte Gut gelangt sodann zum Sichter 7. Dort findet ein endgültiges Trennen der Natursteine einerseits von den Beimengungen andererseits statt. Zum Abführen der Beimengungen dient eine Saugzugeinrichtung 7.1, die die Beimengungen nach oben abzieht - siehe Fig. 2. Wie man dort ebenfalls erkennt, fallen die gereinigten Natursteine nach unten in einen Auffangbehälter 7.2. Von dort werden sie mittels eines Bandförderers 8 der weiteren Verwertung zugeführt - siehe Fig. 3.

## Patentansprüche

1. Verfahren zum Rückgewinnen von Naturstein aus Abfall, der bei der Aufbereitung des Natursteins zu Baustoffen anfällt und der restliches Natursteinmaterial sowie Beimengungen wie Ton und Lehm enthält, mit den folgenden Verfahrensschritten:
1.1 der Abfall wird in einem Brecher soweit vorzerkleinert, daß er schüttfähig ist;
1.2 der schüttfähige Abfall wird erhitzt;
1.3 der erhitzte Abfall wird in eine solche Bewegung versetzt, daß sich seine Partikel relativ zueinander bewegen und sich aneinander reiben, bis wenigstens ein wesentlicher Teil der Beimengungen in Krümel- oder Pulverform vom Natursteinmaterial abgelöst ist;
1.4 Natursteinmaterial und Beimengungen werden einer Sichtung unterworfen;
1.5 die Beimengungen werden abgeführt und das Natursteinmaterial wird einer Wiederverwendung zugeführt.

2. Verfahren nach Anspruch 1, dadurch gekennzeichnet, daß der schüttfähige Abfall wenigstens auf Wasserverdampfungstemperatur erhitzt wird.

3. Verfahren nach Anspruch 1 oder 2, dadurch gekennzeichnet, daß die Sichtung darin besteht, daß die Beimengungen von dem Natursteinmaterial abgesaugt werden.

4. Vorrichtung zum Rückgewinnen von Natursteinmaterial aus Abfallstoff, der bei der Aufbereitung von Naturstein zu Baustoffen anfällt und der Natursteinmaterial sowie Beimengungen wie Ton und Lehm enthält, gekennzeichnet durch die folgenden Merkmale:
4.1 es ist ein Brecher zum Vorzerkleinern des Abfalls bis zur Schüttfähigkeit vorgesehen;
4.2 es ist eine Heizeinrichtung zum Aufheizen des vorzerkleinerten Abfalles vorgesehen;
4.3 es ist eine Aufheizkammer vorgesehen;
4.4 es ist eine Einrichtung zum Bewegen des Abfalls vorgesehen, um zwischen dessen Partikeln eine Relativbewegung und damit eine gegenseitige Reibung zu erzeugen, bis wenigstens ein wesentlicher Teil der Beimengungen in Krümel- oder Pulverform von dem Steinmaterial abgelöst ist;
4.5 es ist ein Sichter vorgesehen, um das Natursteinmaterial von den Beimengungen abzutrennen.

5. Vorrichtung nach Anspruch 4, dadurch gekennzeichnet, daß der Sichter eine Absaugeinrichtung zum Absaugen der Beimengungen ist.

6. Vorrichtung nach Anspruch 4 oder 5, mit den folgenden Merkmalen:
6.1 dem Brecher ist ein Rohr nachgeschaltet, das drehbar gelagert ist und in dem der Abfall von einem Einlaßende zu einem Auslaßende gefördert wird;
6.2 die Heizeinrichtung ist im Bereich des Einlaßendes angeordnet;
6.3 der Sichter ist im Bereich des Auslaßendes angeordnet.

7. Vorrichtung nach Anspruch 6, dadurch gekennzeichnet, daß das Rohr mit Förderorganen wie Spiralen ausgerüstet ist.

8. Vorrichtung nach einem der Ansprüche 4 bis 7, dadurch gekennzeichnet, daß der Rohrmantel wenigstens im stromabwärtigen Endbereich mit Perforationen versehen und von einer Auffangschale zum Auffangen von krümel- oder pulverförmigen Beimengungen versehen ist.

9. Vorrichtung nach einem der Ansprüche 6 bis 8, dadurch gekennzeichnet, daß das Rohr wenigstens auf einem Teil seiner Länge perforiert ist, und daß dem perforierten Teil eine Auffangschale zum Auffangen von durch die Perforationen des Rohres hindurchfallenden Stoffen zugeordnet ist.
